# EUROPEAN PATENT APPLICATION

(11) **EP 1 689 166 A1**
(43) Date of publication of application: **09.08.2006**
(21) Application number: 05101480.1
(22) Date of filing: 25.02.2005
(51) Int. Cl.: H04N 5/225, G03B 19/07, G03B 17/02

(54) **A camera apparatus**

(30) Priority: 10.03.2004 KR 2004016021
(71) Applicant: Samsung Electronics Co., Ltd, Suwon-si, Gyeonggi-do 442-742 (KR)
(72) Inventor: Ahn, Kyoung-jin 504-303, Sinnamusil Jugong Apart., Gyeonggi-do (KR)
(74) Representative: Geary, Stuart Lloyd

(57) **Abstract**

An image photography apparatus and method are provided. The apparatus and method include: a board for performing a predetermined function in an interior portion of the apparatus; and a camera unit having a lens, connected to the board so that electrical signal exchange is possible, wherein a reference plane, virtual plane perpendicular to an optical axis of the lens, and a plane of the board, are substantially perpendicular to each other.

## Description

The present invention relates to a camera apparatus comprising a body, having a front and a back, an image capture unit, and a board for receiving signals from said image capture unit.

A digital still camera (DSC) converts a captured image, into a digital signal which is stored in a recording media such as a hard disk or a memory card. The digital still camera stores a captured (photographed) image on the recording media and so does not require a film. The digital signal representing the captured image can then be provided to a computer. As digital still cameras have a good compatibility with external computers, editing and modification of the image is easy. Also, the DSC is easily connected to the external computer, allowing the captured image to be transferred. However, a DSC is primarily used for photographing still images as the recording media has a limited capacity. Some DSCs can also perform a video recording function for a limited duration. However, since an apparatus for recording a moving image and sound, as well as playing the same simultaneously upon play back, needs to be provided to properly record a moving image, the DSC is inappropriate for the recording, storing, and playing of a moving image. Therefore, to record a moving image, a recording/playing apparatus for recording an image and a sound onto the recording media such as a tape, and playing back the same, is required. A camcorder is typically used to accomplish this.

The camcorder, which mainly uses a cassette tape for the recording media, has a cassette tape mounted in its deck to record a moving image. The camcorder also has a microphone and a speaker. Such a camcorder can also capture a still image, but the image quality of that still image is poor when compared to that of the still image photographed by the above DSC. Therefore, the camcorder is used for photographing moving images. Since the camcorder has more functions than the DSC and therefore a more complicated construction, the camcorder is usually larger and of a higher price.

Up to now, to use each function of the DSC and the camcorder to provide good quality images, the two products have been purchased separately. Therefore, this increases costs for consumers. Also, because the two products should be carried together in order to capture both still images and moving images, it has been quite inconvenient. Recently, to solve this problem, a product combining the DSC and camcorder functions have been incorporated into one single product. This allows a user to select the desired function when necessary. A dual cam is an example of one of these products.

However, in the dual cam, since the two functions are incorporated into one single product, problems are encountered because the product size increases and the structure is more complicated. In the dual cam, a digital still camera lens for photographing a still image and a digital video camera (DVC) lens for recording a moving image are arranged together in a narrow space. In particular, the size of the dual cam is determined, primarily, by the space between the digital still camera lens and the board for performing signal transfer to and from the digital still camera. According to known arrangements, the DSC lens and the board thereof are arranged horizontally so that an optical axis of the lens and a plane of the board are arranged perpendicularly to one another. However, with this arrangement, the volume of the dual cam increases. Therefore, an structural arrangement between the DSC lens and the board is needed to reduce overall apparatus size.

The present invention has been developed in order to address the above drawbacks and other problems associated with what is known. Therefore, an object of the present invention is to provide an camera apparatus and method of reducing the size of the product through the efficient arrangement of the digital still camera lens and the board.

The present invention relates to a camera apparatus comprising a body, having a front and a back, an image capture unit, and a board for receiving signals from said image capture unit.

A camera apparatus according to the present invention characterised in that the board is positioned to extend from the front and towards the back of the body and is located to one side of and substantially parallel to the optical axis of the image capture unit.

An additional preferred and/or optional feature is set forth in claim 2 appended hereto.

An embodiment of the present invention will now be described, by way of example only, and with reference to the accompanying drawings, in which:
Figure 1 is a perspective view of an camera apparatus according to an embodiment of the present invention;
Figure 2 is an exploded, perspective view of Figure 1;
Figure 3 is a perspective view of a sub board and a second camera unit assembly without a second outer casing in a second outer assembly according to an embodiment of the present invention;
Figure 4 is a perspective view of Figure 3, seen from the other side; and
Figure 5 is a drawing showing a structural relationship between a sub board and a second camera unit according to an embodiment of the present invention.

The same drawing reference numerals are used for the same elements throughout the drawings. Also, well-known functions or constructions are omitted for brevity.

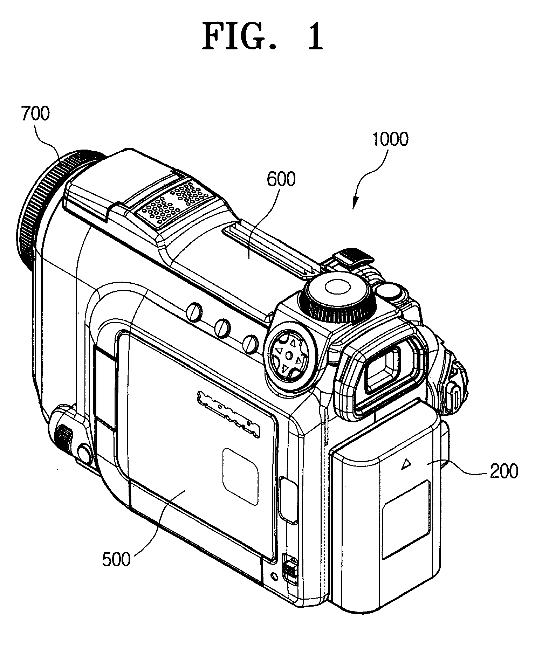

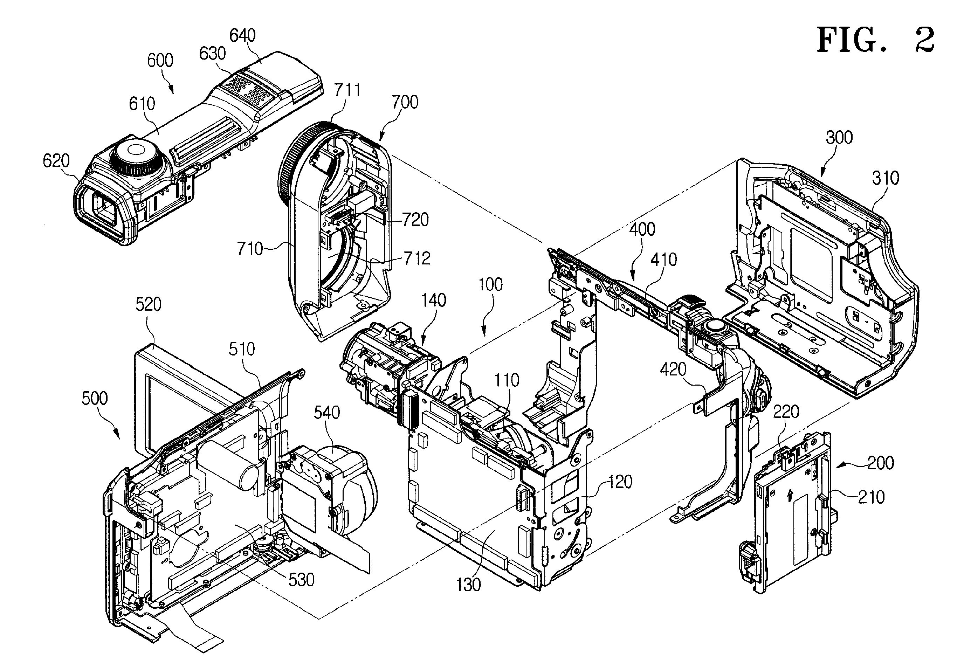

As shown in Figures 1 and 2, the camera apparatus (image photography apparatus) 10 has a deck assembly 100; a rear assembly 200; a first outer assembly 300; a deck cover assembly 400; a second outer assembly 500; an upper assembly 600; and a front assembly 700.

The deck assembly 100 has a deck unit 110 for the recording and play back of signals representing captured images to and from a magnetic tape; a deck housing 120 enclosing and supporting the deck unit 110; a main board 130 installed so that it can be connected to the deck unit 110 and a first camera unit 140 allowing signal transfer therebetween. The first camera unit 140 is a known digital video camera (DVC) for capturing moving images.

The rear assembly 200 is fixed to the deck housing 120 by a screw, and has a rear casing 210 and a rear board 220 joined to the inside of the rear casing 210.

The first outer assembly 300 covers one side of the deck assembly 100, for example, to cover a part of its right side, and has a first outer casing 310 which is formed by moulding. A zoom knob (not shown) for adjusting the level of zoom; a photo-shutter (not shown) for photographing the still image; a mode selection switch (not shown) for selecting between a moving image capture mode or still image capture mode; and a recording button (not shown), are installed on the first outer casing 310.

The deck cover assembly 400 has a cover casing 410 which is formed by moulding and; a supporting frame 420 joined to the inside of the cover casing 410.

The second outer assembly 500 has a second outer casing 510; a first display unit 520 joined to the outside of a second outer assembly 510; a sub board 530; and a second camera unit 540.

The second outer casing 510 encloses the left side of the deck assembly 100, or the exterior side of the main board 130. The second outer casing 510, which is made of a plastic material and is formed using a moulding process, has a display mounting part (not shown) on it's outside. The first display unit 520 is received and mounted on the display mounting part. Also, a roll switch (not shown) for selecting a menu, a plurality of connection ports (not shown) for connecting the camera apparatus to an external apparatus, a speaker unit (not shown) and a plurality of function keys, are installed on the second outer casing 510. Additionally, a variety of other function keys are installed on the second outer casing 510.

The first display unit 520 is preferably a Liquid Crystal Display (LCD) panel and is rotatable about two axes. The LCD is mounted on the exterior of the second outer casing 510 and displays the image photographed by the first and/or the second camera units 140 and 540 or the playback image. The first display unit 520 is connected to the sub board 530 by a cable.

The sub board 530 is joined to the inside of the second outer casing 510. The first display unit 520 and the second camera unit 540 are connected to the sub board 530. Also, when the first outer assembly 500 is joined to the deck assembly 100, the sub board 530 is joined to the main board 130 by a cable. Such a sub board 530 is arranged to be in parallel with the main board 130. Also, the above-described roll switch, connection ports, speaker unit and function keys are all connected to the sub board 530.

The second camera unit 540 is a digital still camera (DSC) used for photographing still images. The second camera unit 540 has a Charge-Coupled Device (CCD) having a greater number of pixels than those of the first camera unit 140 which results in a higher quality image.

The upper assembly 600 has an upper casing 610 for covering the upper part of the deck assembly 100; a viewfinder unit 620 located at one end of the upper casing 610 which makes it possible for a user to view the images captured by the first camera unit 140 or the second camera unit 540 or played back from the magnetic tape; a microphone unit 630 joined to the upper casing 610 projecting towards the outside; and a flash unit 640. The viewfinder unit 620, the microphone unit 630, and the flash unit 640 are connected to the sub board 530. Also, a variety of function-key modules (not shown) for performing the functions of the second camera unit 540 (DSC), is installed on the upper casing 610, and the function-key module is connected to the sub board 530.

The front assembly 700, which is designed to cover the front side of the apparatus on which the first and the second camera units 140 and 540 are arranged, has a front casing 710 having a first lens hood and a second lens hood which are open and correspond to the first and the second camera units 140 and 540, respectively. A sensor module 720 is supported on the inside of the front casing 710 having a remote control sensor and an illuminating sensor (not shown).

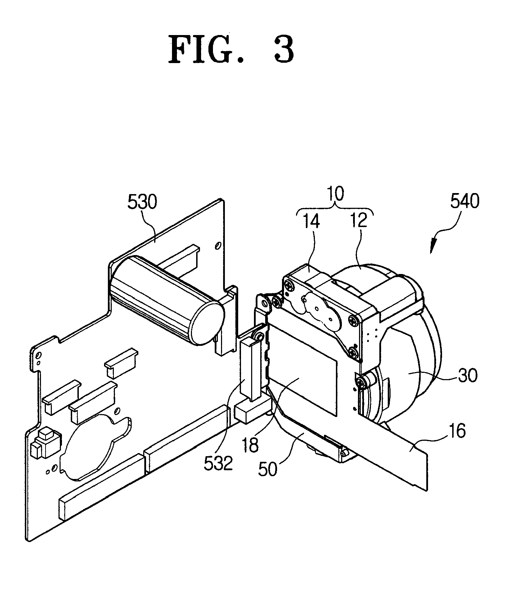

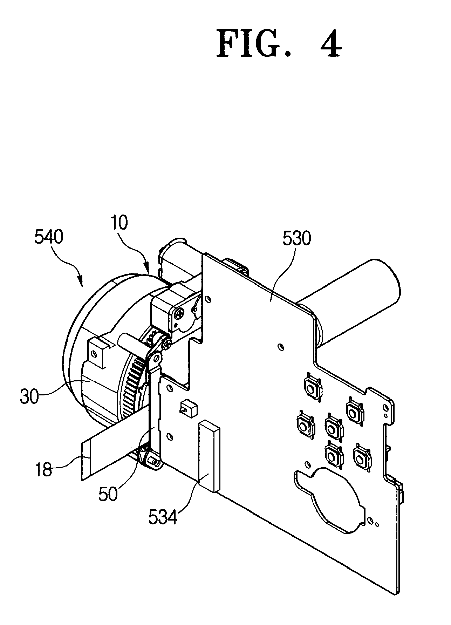

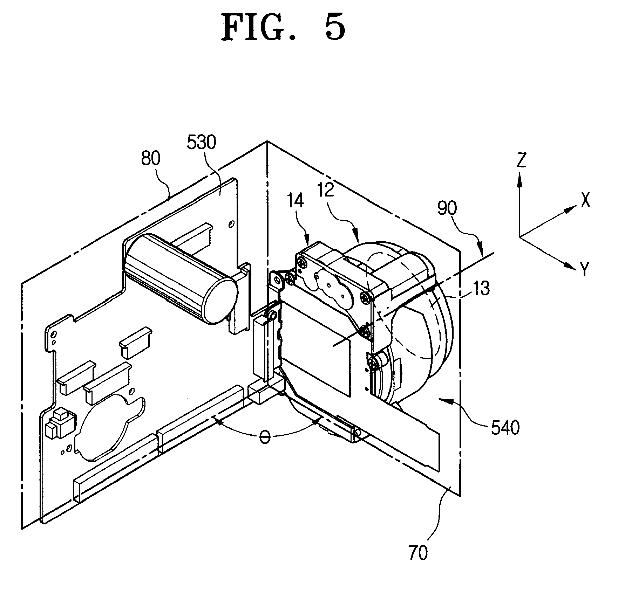

Figure 3 shows an assembly structure of the second camera unit 540 and the sub board 530 of Figure 2. Figure 4 is a perspective view of Figure 3, seen from the other side. Figure 5 shows a structural relationship between the second camera unit 540 and the sub board 530. As shown in Figures 3, 4, and 5, the second camera unit 540 is connected, joined, and installed so that the signal transfer to and from the sub board 530 is possible.

Like known digital still camera lens modules, the second camera unit 540 includes a lens module 10 having a casing 12 which houses therein a lens 13 (see Figure 5) and a CCD (not shown). The second camera unit 540 also contains a motor 14, signal cables 16 and 18 to the CCD and the motor 14; a holder 30 for enclosing the outer periphery of the casing 12; and a bracket 50 screwed to the holder 30. As shown in the drawings, the second camera unit 540 is joined to the sub board 530 by the bracket 50.

Also, signal cables 16 and 18 which transfers signals from the CCD to the sub board 530, is mounted on the back of the motor 14. The motor signal cable 16 is connected to connector 532 located on the front of the sub board 530, and the CCD signal cable 18 is connected to connector 534 located on the back of the sub board 530. This allows signal transfer to and from the sub board 530. As described above, the sub board 530 is connected to the connector located on the main board 130 by the connector and a separate signal cable. This allows signals to be transferred to and from the main board 130.

Referring to Figure 5, a virtual plane 70, which is the Y-Z plane, is substantially perpendicular to an optical axis 90 formed at the centre of the lens 13 contained in the lens module 10. The virtual plane 70 is also substantially perpendicular to the plane 80, which is the Z-X plane, of the board. When the Y-Z plane and the Z-X plane are in substantially perpendicular relation with each other as described above, the size of the camera apparatus 1000 is reduced because in the dual cam which requires the deck assembly 100 (Figure 1), the deck assembly 100 is arranged in the space formed by the camera unit 540 and the sub board 530.

With the known structure where the plane perpendicular to the optical axis of the known digital still camera lens and the plane of the board capable of performing signal flow which is to and from the digital still camera lens, are arranged in a parallel structure, it is not easy to reduce the size of the camera apparatus. However, by making the camera unit 540 and the sub board of embodiments of the present invention arranged as described above, the size of the camera apparatus is reduced.

To make more efficient use of the space between the camera unit 540 and the sub board 530, one side of the second camera unit 540 is arranged and joined to one corner side of the sub board 530 as shown in Figures 2 to 4. Also, when the second outer assembly 500 and the deck assembly 100 are assembled, the second camera unit 540 is joined to the lower end of the sub board 530 so that it can be arranged below the first camera unit 140. Accordingly, the second camera unit 540 is installed in the lower part of the first camera unit 140 as shown in Figure 2. As described above, one corner side of the second camera unit 540 is joined to the lower end and one corner side of the sub board 530, and as a result, the deck assembly 100 is positioned on the space secured therein. Therefore, the size of the camera apparatus is reduced.

Although the present invention has been described in relation to the arrangement structure between the camera unit and the sub board, the invention is not limited to that specific embodiment, but applied to any arrangement structure as far as it is an arrangement structure between the camera unit and any board for exchanging signal to and from the camera unit among a plurality of boards of the image photography apparatus.

As is apparent from the foregoing, according to the camera apparatus of the present invention, the space in the interior of the camera apparatus is effectively used, so that the size of the camera apparatus is reduced.

## Claims

1. A camera apparatus (10) comprising:
a body, having a front and a back;
an image capture unit (2); and
a board (530) for receiving signals from said image capture unit (2),
**characterised in that** the board (530) is positioned to extend from the front and towards the back of the body and is located to one side of and substantially parallel to the optical axis of the image capture unit (2).

2. A camera apparatus according to claim 1, comprising a media deck (100),
wherein at least part of the media deck (100) is located in the angle between the board (530) and the image capture unit (2).

3. An image photography apparatus comprising:
a board installed in an interior portion of the apparatus; and
a camera unit including a lens, connected with the board so that electrical signal exchange occurs,
wherein a reference plane, which is a virtual plane perpendicular to an optical axis of the lens, and a plane of the board, are arranged to be substantially perpendicular to each other.

4. The apparatus according to claim 3, wherein the camera unit is joined to an edge of the board.

5. The apparatus according to claim 4, wherein an edge of the camera unit is joined to the edge of the board.

6. The apparatus according to claim 3, wherein the camera unit is joined to a lower end of the board.

7. The apparatus according to claim 6, wherein an edge of the camera unit is joined to the lower end of the board.

8. An image photography apparatus comprising:
a digital still camera unit;
a digital video camera unit;
a deck unit; and
a plurality of boards for performing a predetermined function in an interior portion of the apparatus,
wherein a reference plane which is a virtual plane substantially perpendicular to an optical axis of a lens of the digital still camera unit, and a plane of at least one board among a plurality of the boards, connected with the digital still camera unit so that electrical signal exchange occurs, are substantially perpendicular to each other.

9. The image photography apparatus of claim 8, wherein the plurality of boards comprise a main board and a sub-board.

10. The image photography apparatus of claim 9, wherein the main board and the sub-board are joined via a signal cable.
